# EUROPEAN PATENT APPLICATION

(11) **EP 2 043 370 A1**
(43) Date of publication of application: **01.04.2009**
(21) Application number: 07790730.1
(22) Date of filing: 13.07.2007
(51) Int. Cl.: H04N 7/32

(54) **REPRODUCTION DEVICE, REPRODUCTION METHOD, AND PROGRAM**

(30) Priority: 14.07.2006 JP 2006194676
(71) Applicant: Sony Corporation, Tokyo 108-0075 (JP)
(72) Inventor: KATO, Tsuyoshi, Tokyo 108-0075 (JP); LI, Jianming, Tokyo 108-0075 (JP); IZUMI, Nobuaki, Tokyo 108-0075 (JP)
(74) Representative: Thévenet, Jean-Bruno
(86) International application number: PCT/JP2007/063949
(87) International publication number: WO 2008/007758

(57) **Abstract**

The present invention relates to a reproduction device, a reproduction method, and a program that enable the maintenance of real-time production of encoded video signals while suppressing a visually bad impression. As shown in FIG. 3, load reduction processes executed by a decoder include the following six types of processes: that is, a deblocking filter off process, a B picture simple motion compensation (MC) process, a P picture simple motion compensation (MC) process, a non-store picture frame skip process, a store picture frame skip process, and an only I picture reduction process. These six types of load reduction processes gradually reduce loads (that is, computation amounts) required for decoding by being added one at a time for execution in the described order. The present invention can apply to a decoder of an H.264/AVC, for example.

## Description

### Technical Field

The present invention relates to a reproduction device, a reproduction method, and a program, and more particularly to a reproduction device, a reproduction method, and a program that decrease reproduction delay by partially omitting a reproduction process according to a current load condition when an encoded image signal is reproduced.

### Background Art

When a video signal encoded by an encoding system typified by an MPEG2 system, an H.264/AVC system, and the like is reproduced, there are a method where a decoder used is configured by hardware, and a method where the decoder used is implemented by executing software with a personal computer (hereinafter referred to as PC) or the like.

Of decoders by hardware and decoders by software, particularly in the case of decoders by software, when PC is placed into a high load condition because of the computation capacity of the PC that executes corresponding software, execution states of other programs, or the like, delay in the reproduction of video signals occurs, and real-time reproduction may be disenabled.

When such a failure in real-time reproduction of video signals occurs, conventionally, an attempt has been made to cope with the reproduction delay by decreasing computation amounts during decoding by thinning out frames for reproduction (frame skip) (e.g., see Patent Document 1).

Patent Document 1: JP-A No. 2004-328511

### Disclosure of the Invention

### Technical Problem

However, in the case where frame skip to cope with failure in real-time production is executed, display intervals of frames is disturbed, thereby giving a visually bad impression as a result of images moving and stopping.

By the way, in comparison with the MPEG2 system currently adopted generally as a compression encoding system, since the H.264/AVC system that will be widely adopted in the future requires more computation amounts during decoding, real-time reproduction failure of video signals in a high load condition is expected to occur also in the future. Therefore, measures for real-time reproduction failure that give a visually less bad impression and support video signals of the H.264/AVC system are required.

The present invention has been made in view of such circumstances, and enables the maintenance of real-time production of encoded video signals while suppressing a visually bad impression by performing a decode process according to a load condition.

### Technical Solution

A reproduction device of one aspect of the present invention, in a reproduction device that reproduces encoded video data, includes: decode means that decodes inputted encoded video data; detection means that detects delay time of output timing of a video signal being a decode result; and control means that executes at least one of a process of controlling the decode means based on the detected delay time and omitting deblocking filtering, a process of limiting bidirectional prediction to one direction, and a process of replacing motion compensation by an approximation filter with a small amount of computation, included in a series of decode processes.

The control means can also execute a process of replacing motion compensation for a B picture by the approximation filter with the small amount of computation, according to the process of limiting the bidirectional prediction to one direction, included in a series of decode processes.

The control means can control the decode means based on the detected delay time and execute at least one of: a process of omitting deblocking filtering; a process of limiting the bidirectional prediction to one direction; a process of replacing motion compensation by the approximation filter with the small amount of computation; a process of frame-skipping a picture not referred to from other picture; and a process of frame-skipping the picture, included in a series of decode processes.

The reproduction device of one aspect of the present invention further can include adjusting means that adjusts display timing of a picture not frame-skipped contained in a GOP that is in common with that of the picture frame-skipped by the process of frame-skipping the picture referred to from other picture.

A reproduction method of one aspect of the present invention, in a reproduction method of a reproduction device including decode means that decodes encoded video data, includes the steps of: detecting delay time of output timing of a video signal being a decode result; controlling the decode means based on the detected delay time; and executing at least one of a process of omitting deblocking filtering, a process of limiting bidirectional prediction to one direction, and a process of replacing motion compensation by an approximation filter with a small amount of computation, included in a series of decode processes.

A program of one aspect of the present invention is a program for controlling a reproduction device that reproduces encoded video data, instructs a computer to execute a processing including a step of: decoding inputted encoded video data; detecting delay time of output timing of a video signal being a decode result; and based on the detected delay time, executing at least one of a process of omitting deblocking filtering, a process of limiting bidirectional prediction to one direction, and a process of replacing motion compensation by an approximation filter with a small amount of computation, included in a series of decode processes.

In one aspect of the present invention,: the inputted encoded video data is decoded and delay time of output timing of a video signal being a decode result is detected, and based on the detected delay time, at least one of a process of omitting deblocking filtering; a process of limiting bidirectional prediction to one direction; and a process of replacing motion compensation by an approximation filter with a small amount of computation, included in a series of decode processes, is executed.

### Advantageous Effects

According to one aspect of the present invention, real-time reproduction of encoded video signals can be maintained while suppressing a visually bad impression.

### Brief Description of Drawings

[FIG. 1] FIG. 1 is a block diagram showing a construction example of a reproduction device to which the present invention is applied.
[FIG. 2] FIG. 2 is a block diagram showing a construction example of a decoder in FIG. 1.
[FIG. 3] FIG. 3 is a view showing transitions of a load reduction processes.
[FIG. 4] FIG. 4 is a view for explaining a non-store picture frame skip process.
[FIG. 5] FIG. 5 is a view for explaining a store picture frame skip process.
[FIG. 6] FIG. 6 is a view for explaining display timing adjustment involved in a store picture frame skip process.
[FIG. 7] FIG. 7 is a flowchart for explaining a reproduction delay accommodation process.
[FIG. 8] FIG. 8 is a block diagram showing a construction example of a general-purpose personal computer.

### Explanation of Reference Numerals

10 Reproduction device, 11 Decoder, 12 Delay detection part, 13 Control part, 21 Variable-length decoding part, 22 Dequantization part, 23 Reverse orthogonal or integer conversion part, 24 Addition part, 25 Deblocking filter, 26 Frame memory, 27 Motion compensation part, 28 Intra prediction part, 29 Buffer, 30 DA conversion part, 100 Personal computer, 101 CPU

### Best Mode for Carrying Out the Invention

Hereinafter, a concrete embodiment to which the present invention is applied will be described with reference to the drawings.

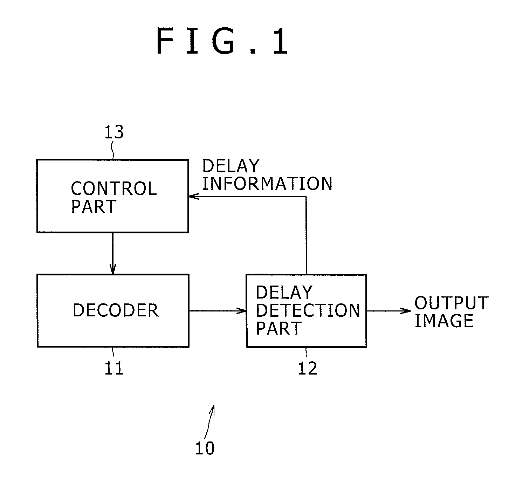

FIG. 1 shows a construction example of a reproduction device as one embodiment of the present invention. A reproduction device 10 is composed of a decoder 11 that decodes an encoded video signal inputted from a preceding stage, a delay detection part 12 that detects delay time of a video signal inputted from the decoder 11, and a control part 13 that controls a decode process by the decoder 11.

Further, an encoded video signal inputted to the decoder 11 is assumed to be encoded by an H.264/AVC system.

The decoder 11, according to control from the control part 13, decodes an encoded video signal inputted from a preceding stage according to a decoding system corresponding to the encoding system, and outputs a video signal obtained as the decoding result to the delay detection part 12. Further, the decoder 11, when no delay occurs in its own output, executes a series of general decoder processes as a decoder of the H.264/AVC system, according to control from the control part 13. Conversely, when delay occurs in its own output, by omitting parts of the series of general decoder processes as the decoder of the H.264/AVC system, computation amounts are reduced to recover the occurrence of delay. Note that, details in a process of omitting parts of the series of decoder processes (hereinafter referred to as a load reduction processes) will be described later.

The delay detection part 12 adjusts timing of outputting a video signal inputted from the decoder 11 to a display or the like of a following stage, at the same time detects delay time of the video signal inputted from the decoder 11, that is, a difference between timing outputted from the decoder 11 and timing to be originally outputted, and sends delay information containing detection results to the control part 13.

The control part 13 controls a series of decode processes by the decoder 11, based on the delay information sent from the delay detection part 12.

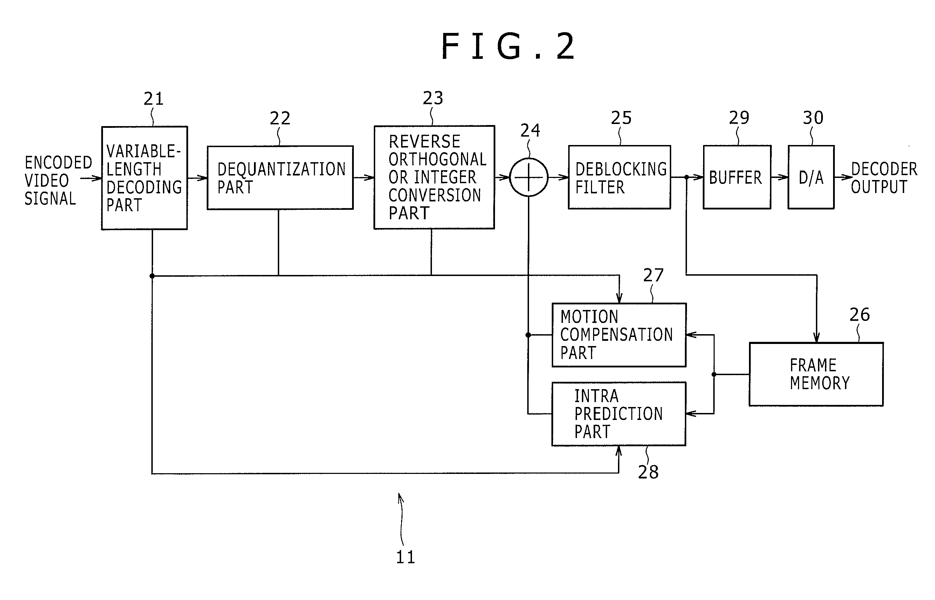

FIG. 2 shows a detailed construction example of the decoder 11. The decoder 11 is composed of a variable-length decoding part 21, a dequantization part 22, a reverse orthogonal or integer conversion part 23, an addition part 24, a deblocking filter 25, a frame memory 26, a motion compensation part 27, an intra prediction part 28, a buffer 29, and a DA conversion part (D/A) 30.

As is apparent from the drawing, since the decoder 11 is constructed like general decoders of the H.264/AVC system, a description of a series of general decoder processes is omitted.

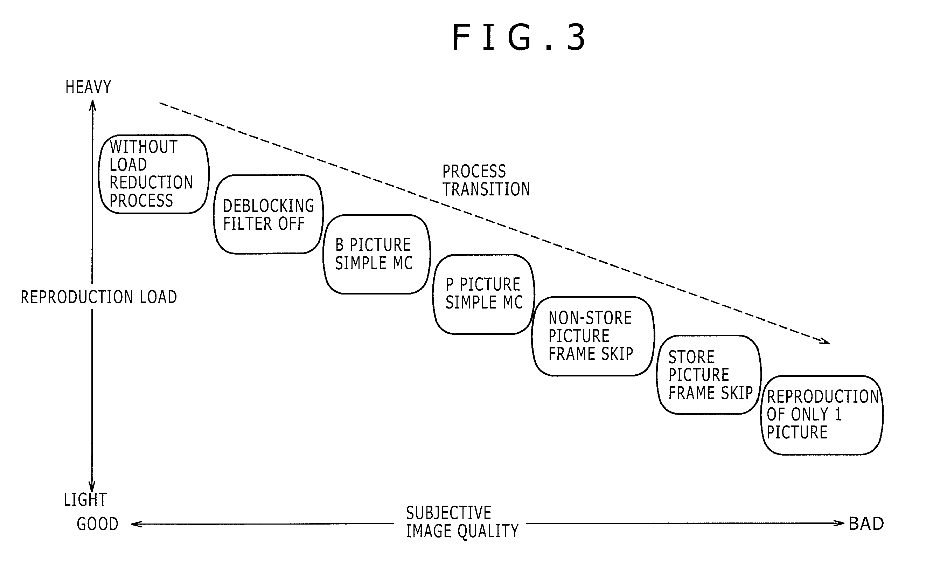

Next, the load reduction processes omitted when delay occurs in output of the decoder 11 will be described with reference to FIG. 3.

The load reduction processes executed by the decoder 11 include the following six types of processes as shown in FIG. 3. Specifically, these processes include a deblocking filter off process, a B picture simple motion compensation (MC) process, a P picture simple motion compensation (MC) process, a non-store picture frame skip process, a store picture frame skip process, and an only I picture reproduction process.

These six types of load reduction processes gradually reduce loads (that is, computation amounts) required for decoding by being executed in addition one at a time in the described order. However, subjective image quality also deteriorates gradually according to execution of the load reduction processes.

On the other hand, the order of executing these six types of load reduction processes may be changed, or execution of several of them may be omitted.

Each load reduction process will be detailed.

### Deblocking filter off process

Computation amounts are reduced by omitting the operation of the deblocking filter 25 in FIG. 2, which is an in-loop filter in a series of decoder processes of the H.264/AVC system. The deblocking filter off process can be executed in units of pictures.

### B picture simple motion compensation process

During both forward and backward predictions of a B picture in the motion compensation part 27 in FIG. 2, computation amounts are reduced by omitting either of forward and backward motion compensation. Moreover, computation amounts are reduced by using Chroma MC (motion compensation of color-difference signal) that is small in computation amount, instead of a computation method of Luma MC (motion compensation of brightness signal) defined in the decode specifications of the H.264/AVC method. By using codes of Chroma MC originally mounted, an increase in binary size can be prevented unlike the case of additionally implementing approximate computation. The B picture simple motion compensation process can be executed in units of pictures.

### P picture simple motion compensation (MC) process

Computation amounts are reduced by using Chroma MC (motion compensation of color-difference signal) that is small in computation amount, instead of a computation method of Luma MC (motion compensation of brightness signal) defined in the decode specifications of the H.264/AVC method. By using codes of Chroma MC originally mounted, an increase in binary size can be prevented unlike the case of additionally implementing approximate computation. The P picture simple motion compensation process can be executed in units of pictures.

### Non-store picture frame skip process

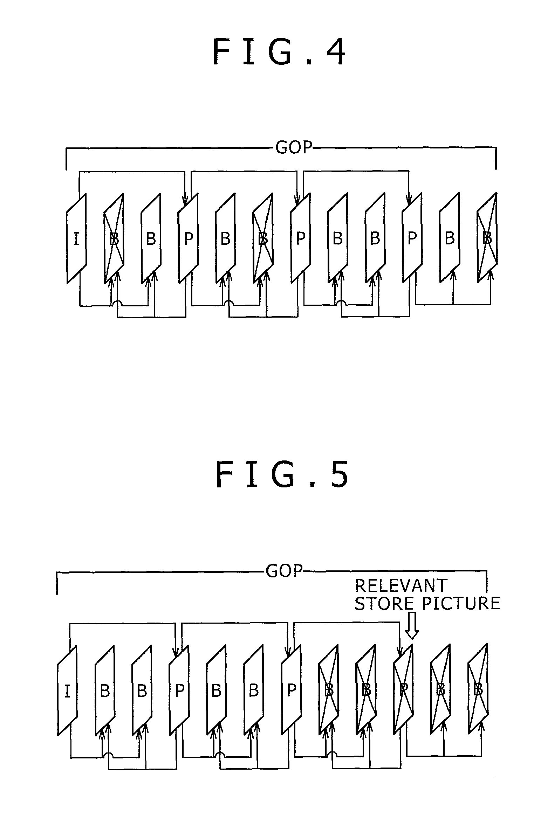

Computation amounts are reduced by limiting the decoding of non-store pictures that are unlikely to be referenced from other pictures and are not held after being decoded, to a required minimum level, and frame-skipping the non-store pictures. In this case, the non-store pictures can be any of I, P, and B pictures. FIG. 4 shows a state where three B pictures drawn with an x-mark in the B pictures which are the non-store pictures, of the GOP including 12 pictures, are frame-skipped. The non-store picture frame skip process can be executed in units of pictures.

### Store picture frame skip process

Computation amounts are reduced by limiting the decoding of store pictures that may be referenced from other pictures and are held after being decoded, to a required minimum level, and frame-skipping the store pictures. In this case, sore pictures can be any of I, P, and B pictures. When the store picture is frame-skipped, since pictures referencing the store picture also cannot be decoded, and furthermore pictures referencing the pictures also cannot be decoded, frame-skipping a store picture would cause a period in which several successive pictures cannot be displayed.

In an example in FIG. 5, of 12 pictures constituting the GOP, the third P picture from the right is frame-skipped as a relevant store picture. As a result, the surrounding four B pictures referencing the relevant store picture cannot be decoded, these will be also frame-skipped.

Thus, in the store picture frame skip process, several successive pictures are frame-skipped, and if some action is not taken, the period appears as if reproduction were halted, so that a visually bad impression will be given.

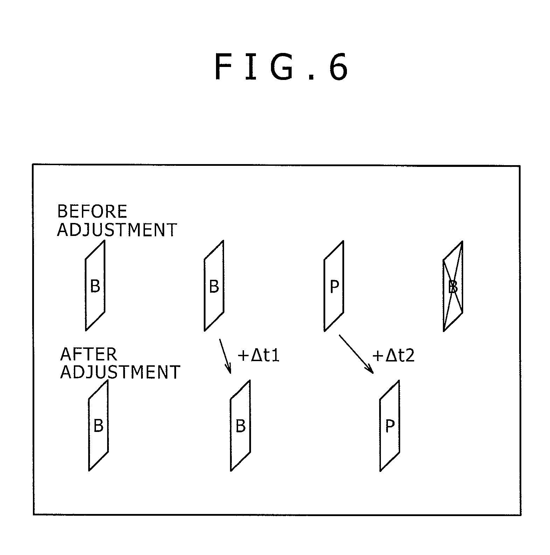

Accordingly, when the store picture frame skip process is executed, the timing of displaying several pictures immediately before frame skip is adjusted by the delay detection part 12. For example, when frame skip is performed as shown in FIG. 5, display timing is offset by only Δt2 for an immediately preceding P picture, and offset by only Δt1 for the B picture preceding it, as shown in FIG. 6. By thus adjusting the timing of displaying several pictures immediately before frame skip, a period of frame skip is visually shortened and a bad impression is eliminated.

In this way, since the timing of displaying several pictures immediately before frame skip that are not frame-skipped is adjusted, the store picture frame skip process is executed not in units of pictures but in units of GOP unlike other load reduction process.

On the other hand, the interval of the timing of displaying several pictures immediately before frame skip may be equal or may be gradually widened.

### Only I picture reproduction process

Computation amounts are reduced by decoding only an I picture of I, P, and B pictures and frame-skipping the P and B pictures. Also in the only I picture reproduction process, like the store picture frame skip process, the timing of displaying the I pictures is adjusted by the delay detection part 12.

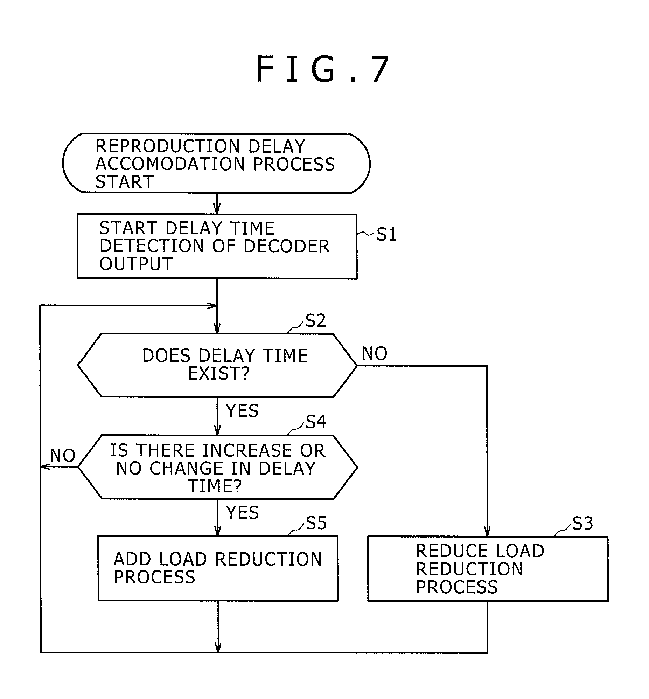

Next, the operation (hereinafter referred to as a reproduction delay accommodation process) of the reproduction device 10 of this embodiment will be described with reference to a flowchart in FIG. 7.

The reproduction delay accommodation process is started when an encoded video signal encoded by the H.264/AVC system is inputted to the reproduction device 10 to instruct its reproduction.

In Step S1, the decoder 11 decodes an encoded video signal inputted from a preceding stage by a series of general decoder processes of the H.264/AVC system, and outputs a video signal being a decoding result to the delay detection part 12. The delay detection part 12 starts the operation of detecting delay time of the video signal inputted from the decoder 11, that is, a difference between timing outputted from the decoder 11 and timing to be originally outputted, and sending delay information containing a detection result to the control part 13.

In Step S2, the control part 13 determines whether delay occurs in the output of the decoder 11, based on the delay information from the delay detection part 12. When it is determined that no delay occurs in the output of the decoder 11, the process is advanced to Step S3 to cut a process having been executed last of load reduction processes being currently executed. On the other hand, when no load reduction process is executed, a series of general decoder processes is continued as they are.

In Step S2, when it is determined that delay is occuring in the output of the decoder 11, the process is advanced to Step S4. In Step S4, the control part 13 determines whether no delay time increases or changes in comparison with the preceding determination. When it is determined that no delay time increases or changes in comparison with the preceding determination, the process is advanced to Step S5.

In Step S5, the control part 13 adds one of the six types of load reduction processes (a deblocking filter off process, a B picture simple motion compensation (MC) process, a P picture simple motion compensation (MC) process, a non-store picture frame skip process, a store picture frame skip process, and an only I picture reproduction process) in the described order for execution by the decoder 11. Thereby, computation amounts of the decoder 11 are reduced. Therefore, a decrease in delay time can be expected. After this, the process returns to Step S2, and subsequent process is continued.

In Step S4, when it is determined that there is no increase or change in delay time in comparison with the preceding determination, that is, delay time decreases, the process returns to Step S2, and subsequent process is continued.

Further, the reproduction delay accommodation process is continued until the reproduction of the inputted encoded video signal terminates, or reproduction discontinuation is indicated.

According to the reproduction delay accommodation process described above, when reproduction delay occurs, load reduction processes are stagedly added, and computation amounts required for the encoding process are reduced. In addition, since frame skip is not performed until the P picture simple motion compensation (MC) process, and display timing is adjusted also after the non-store picture frame skip process, real-time production of encoded video signals can be maintained while suppressing the visually bad impression that images are stopped.

However, the execution order of the six types of load reduction processes may be changed, or the execution of several of them may be omitted.

Further, the present invention can be applied to not only a reproduction device that reproduces encoded video signals encoded by the H.264/AVC system but a reproduction device that reproduces encoded video signals encoded by other encoding systems such as an MPEG2 system.

By the way, reproduction delay of encoded video signals may occur when the decoder 11 shown in FIG. 2 is implemented either by hardware, or software. The present invention may be applied whether the decoder 11 is implemented by hardware or software.

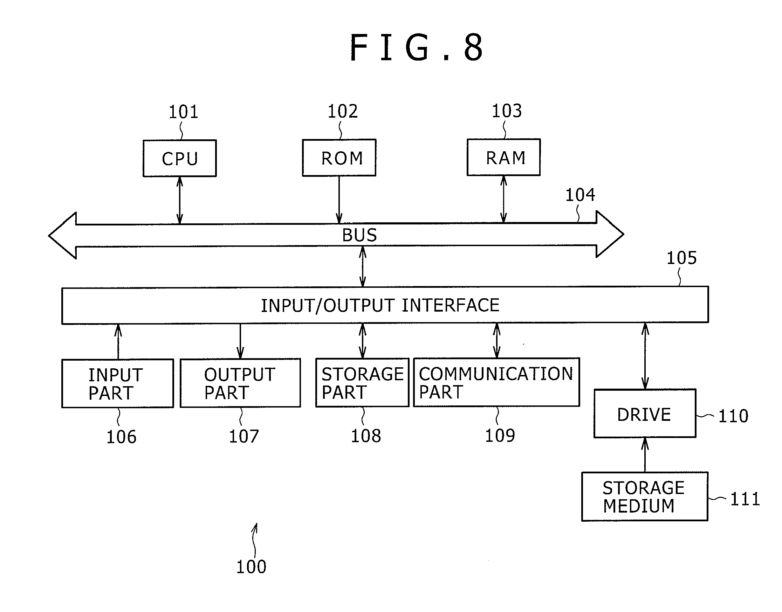

When the decoder 11 is implemented by software, and the above-described series of processes are executed, a program constituting the software is installed from a storage medium by a computer built into dedicated hardware, or a general-purpose personal computer or the like constructed as shown in FIG. 8, for example, that can execute various functions by installing various programs.

A personal computer 100 incorporates a CPU (Central Processing Unit) 101. An input-output interface 105 is connected to the CPU 101 through a bus 104. A ROM (Read Only Memory) 32 and a RAM (Random Access Memory) 33 are connected to a bus 34.

An input part 106 including input devices such as a keyboard, or a mouse for inputting operation commands by users, an output part 107 including a display such as a CRT (Cathode Ray Tube) or an LCD (Liquid Crystal Display) that displays operation screens and the like, a storage part 108 including a hard disk drive and the like that store programs and various types of data, and a communication part 109 including a modem, a LAN (Local Area Network) adapter, and the like that performs a communication process through a network typified by the Internet are connected to the input-output interface 105. Moreover, a drive 110 that reads and writes data from and to a storage medium 111 such as a magnetic disc (including a flexible disc), an optical disc (including a CD-ROM (Compact Disc-Read Only Memory) and a DVD (Digital Versatile Disc)), an optical magnetic disc (including an MD (Mini Disc)), or a semiconductor memory is connected to the input-output interface 105.

A program that instructs the personal computer 100 to execute the above-described series of processes as the decoder 11 is supplied to the personal computer 100 in a state in which it is stored in the storage medium 111, and it is read by the drive 110 and installed in a hard disk drive incorporated in the storage part 108. A program installed in the storage part 108 is loaded from the storage part 108 into the RAM 103 for execution by a command of the CPU 101 corresponding to a command inputted to the input part 106 from a user.

Further, in the present description, steps executed based on a program obviously include processes performed in a time series in the described order, and also include processes performed in parallel or individually even though they are not always performed in time series.

In addition, embodiments of the present invention are not limited to the above-described embodiment, and may be changed in various ways without departing from the purport of the present invention.

## Claims

1. A reproduction device that reproduces encoded video data, comprising:
decode means that decodes inputted encoded video data;
detection means that detects delay time of output timing of a video signal being a decode result; and
control means that controls the decode means based on the detected delay time and executes at least one of a process of omitting deblocking filtering, a process of limiting bidirectional prediction to one direction, and a process of replacing motion compensation by an approximation filter with a small amount of computation, included in a series of decode processes.

2. The reproduction device according to Claim 1,
wherein the control means also executes a process of replacing motion compensation for a B picture by the approximation filter with the small amount of computation, according to the process of limiting the bidirectional prediction to one direction, included in the series of decode processes.

3. The reproduction device according to Claim 1,
wherein the control means controls the decode means based on the detected delay time and executes at least one of: a process of omitting deblocking filtering; a process of limiting the bidirectional prediction to one direction; a process of replacing motion compensation by the approximation filter with the small amount of computation; and a process of a frame-skipping picture, included in the series of decode processes.

4. The reproduction device according to Claim 3, further including adjusting means that adjusts display timing of a picture not frame-skipped contained in a GOP (Group of Pictures) that is in common with that of the pictures frame-skipped by the process of frame-skipping pictures referred to from other pictures.

5. A reproduction method of a reproduction device including decode means that decodes encoded video data, comprising the steps of:
detecting delay time of output timing of a video signal being a decode result;
controlling the decode means based on the detected delay time; and
executing at least one of a process of omitting deblocking filtering, a process of limiting bidirectional prediction to one direction, and a process of replacing motion compensation by an approximation filter with a small amount of computation, included in a series of decode processes.

6. A program for controlling a reproduction device that reproduces encoded video data, instructing a computer to execute a process including steps of:
decoding inputted encoded video data;
detecting delay time of output timing of a video signal being a decode result; and
based on the detected delay time, executing at least one of a process of omitting deblocking filtering, a process of limiting bidirectional prediction to one direction, and a process of replacing motion compensation by an approximation filter with a small amount of computation, included in a series of decode processes.
